# EUROPÄISCHE PATENTANMELDUNG

(11) **EP 1 166 947 A1**
(43) Veröffentlichungstag der Anmeldung: **02.01.2002**
(21) Anmeldenummer: 01810579.1
(22) Anmeldetag: 14.06.2001
(51) Int. Cl.: B23K 20/12, E21B 17/00, F16L 13/00

(54) **Reibschweissrohrverbindung und reibgeschweisstes Gesteinsbohrwerkzeug mit Bohrflüssigkeitskanal**

(30) Priorität: 28.06.2000 DE 10031416
(71) Anmelder: HILTI Aktiengesellschaft, 9494 Schaan (LI)
(72) Erfinder: Bauer, Josef, 86899 Landsberg a. Lech (DE)
(74) Vertreter: Wildi, Roland

(57) **Zusammenfassung**

Eine Rohrverbindung zweier miteinander in einem Stossbereich (2, 2') koaxial zugeordneter reibverschweisster Teile mit einem hohlen Inneren sowie ein zusammengesetztes Gesteinsbohrwerkzeug (10) mit einem Bohrflüssigkeitskanal (11) weist im hohlen Inneren des Stossbereiches (2, 2') eine Zunderhülse (5, 5') auf.

## Beschreibung

Die Erfindung bezeichnet eine Reibschweissrohrverbindung und als weiteren Aspekt ein Gesteinsbohrwerkzeug mit einem sich längs der Werkzeugachse erstreckenden Kanal für die Bohrflüssigkeit für einen zumindest teilweise schlagend abrasiven Materialabtrag von Gestein, wie einen Gesteinsschlagbohrer oder einen Gesteinsbohrmeissel, wobei das Gesteinsbohrwerkzeug aus mehreren, über Reibschweissen miteinander verbundenen, Teilen besteht.

Nach der US4323185 können allgemein zwei koaxial aneinanderstossende Bauteile im Stossbereich ihrer koaxial aneinander stossenden Stirnflächen durch die unter Normalkraft bei einer Relativbewegung durch die Reibung entstehende Wärme reibverschweisst werden.

Nach der US5205464 werden zwei dünnwandige rohrförmige Teile an ihren aneinanderstossenden Stirnflächen reibverschweisst. Dabei treten undefiniert in das Innere hineinragende Zunderwulste auf.

Nach der DE3626009 werden zwei vollzylindrische Teile innerhalb einer äusseren, einen Ringraum ausbildenden, Zunderhülse an ihren aneinanderstossenden Stirnflächen reibverschweisst, wobei die Zunderwulst das Volumen des Ringraumes teilweise auffüllt. Diese Lösung ist auch für den Aussenmantel von Rohren anwendbar, wobei zusätzlich undefiniert in das Innere hineinragende Zunderwulste auftreten.

Gesteinsbohrwerkzeuge weisen einen als Kühlmittelkanal ausgeführten hohlen Schaft auf, welcher im Werkzeugkopf in Düsen endet. Üblicherweise werden derartige Gesteinsbohrwerkzeuge aus mehreren Teilen zusammengesetzt, insbesondere aus einem, oft als Bohrerstange ausgeführten, rohrförmigen Schaft, und einem, an der Stirnfläche eingesetzte Hartstoffeinsätze aufweisenden, Werkzeugkopf mit Düsen. Des weiteren ist das andere Ende des rohrförmigen Schaftes üblicherweise mit einem zur Aufnahme in eine Werkzeugaufnahme ausgebildeten Einsteckende verbunden, welches zumindest teilweise koaxial hohl ist. Der im Inneren des Gesteinsbohrwerkzeuges verlaufende Kühlmittelkanal, welcher zumeist keine koaxial durchgängigen Öffnungen aufweist, ist nicht in gewöhnlicher Weise Material abtragend nachbearbeitbar.

Nach der US4817852 ist ein rohrförmiger Schaft und ein Werkzeugkopf mit Hartstoffeinsätzen und Düsen im Stossbereich zwischen den koaxial aneinander stossenden Stirnflächen des Schafts und des Werkzeugkopfes reibverschweisst. Die beim Reibschweissen notwendig entstehende innere Zunderwulst füllt eine speziell dazu ausgebildete, den Stossflächen benachbart zugeordnete, innere Ringnut aus. Diese Ringnut kann jedoch ein Eindringen der Zunderwulst in den eigentlichen Bohrflüssigkeitskanal nicht sicher verhindern. Somit kann kein definierter Bohrmitteldurchfluss von der Werkzeugaufnahme bis zum Werkzeugkopf sicher gewährleistet werden.

Die US5803187 offenbart ein Gesteinsbohrwerkzeug, aufweisend einen Werkzeugkopf mit Hartstoffeinsätzen und Düsen, sowie einen rohrförmigen Schaft als Bohrerstange, welche in einem Stossbereich stirnseitig koaxial mit gleichem Innendurchmesser aneinandergrenzen. Über diesen Stossbereich hinweg ist im, den Bohrflüssigkeitskanal bildenden, Inneren eine Führungshülse angeordnet, die mit ihrer äusseren Mantelfläche direkt sowohl an der inneren Mantelfläche des rohrförmigen Schafts als auch an der inneren Mantelfläche des Werkzeugkopfes anliegt. Diese aus Teflon bestehende Führungshülse dient nur zur koaxialen Führung der Bohrstange und des Bohrkopfes.

Die Aufgabe der Erfindung besteht in der Realisierung einer Reibschweissrohrverbindung ohne undefiniert in das Innere hineinragende Zunderwülste. Ein weiterer Aspekt der Erfindung besteht in der Realisierung eines sicheren Bohrmitteldurchflusses für ein aus mehreren, durch Reibschweissen miteinander verbundenen, Teilen bestehendes Gesteinsbohrwerkzeug.

Die Aufgabe wird im wesentlichen durch die Merkmale der unabhängigen Ansprüche gelöst. Vorteilhafte Weiterbildungen ergeben sich aus den Unteransprüchen.

Im wesentlichen ist im hohlen Inneren zweier miteinander im Stossbereich koaxial zugeordneter reibverschweisster Teile einer Rohrverbindung eine Zunderhülse angeordnet, welche mit einem teilweise, im wesentlichen dem Innendurchmesser eines Teils entsprechenden, Aussendurchmesser und einem teilweise wesentlich verringertem Aussennutdurchmesser zumindest teilweise kraftschlüssig mit einem Teil verbunden ist, wobei der zwischen dem teilweise wesentlich verringertem Aussennutdurchmesser der Zunderhülse und dem Innendurchmesser zumindest eines Teils im Stossbereich entstandene Ringraum teilweise von dem beim Reibschweissen entstandenen Zunderwulst ausgefüllt ist.

Vorteilhaft beträgt der wesentlich verringerte Aussennutdurchmesser 70 - 80 % des Innendurchmesser eines Teils, wodurch ein guter Kompromiss zwischen dem Volumen des Ringraumes zur Aufnahme der Zunderwulst und dem Innendurchmesser der Zunderhülse gegeben ist.

Weiter vorteilhaft ist die Zunderhülse gestuft mit zwei im wesentlich gleich langen, sich jeweils bis zu den Stirnseiten erstreckenden, Bereichen unterschiedlicher Aussendurchmesser ausgeführt, wobei der verjüngte Teil eine einseitig offene Aussennut ausbildet, und etwa zu zwei Drittel ihrer Länge kraftschlüssig in ein Teil eingepresst, wodurch der wesentlich verringerte Aussennutdurchmesser als einseitig offene Aussennut einen sich über beide Teile im Stossbereich erstreckenden, axial einseitig offenen Ringraum ausbildet. Eine möglicherweise überquellende Zunderwulst breitet sich somit umfänglich verteilt axial aus.

Weiter vorteilhaft besteht die Zunderhülse aus einem Material mit gleichem oder höheren Schmelzpunkt bezüglich der Teile der Rohrverbindung, vorteilhaft aus demselben Material.

Vorteilhaft ist die Verbindung des rohrförmigen Schaftes eines Gesteinsbohrwerkzeuges mit dem Werkzeugkopf und/oder mit dem Einsteckende an den Stirnflächen reibverschweisst ausgeführt, wobei im Inneren des Stossbereiches jeweils eine Zunderhülse angeordnet ist. Durch die nur mögliche axiale Ausdehnung des Zunderwulstes im Ringraum steht der Innendurchmesser der Zunderhülse definitiv als Bohrmittelkanal zur Verfügung und kann sicher bei der Dimensionierung des Bohrmitteldurchflusses berücksichtigt werden.

Die Erfindung wird bezüglich eines vorteilhaften Ausführungsbeispiels näher erläutert mit:
Fig. 1 als Reibschweissrohrverbindung,
Fig. 2 als reibgeschweisstes Gesteinsbohrwerkzeug mit Bohrflüssigkeitskanal

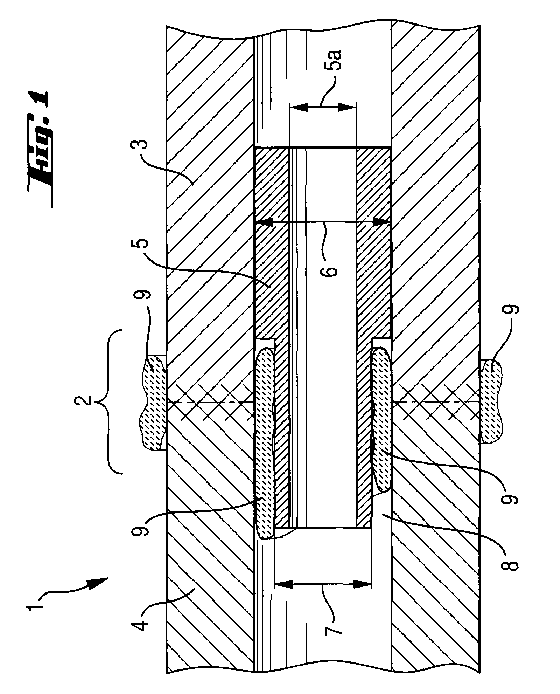

Nach Fig. 1 ist bei einer reibverschweissten Rohrverbindung 1 zweier miteinander in einem Stossbereich 2 koaxial zugeordneter Teile 3, 4 in einem hohlen Inneren eine Zunderhülse 5 angeordnet, welche axial teilweise einen im wesentlichen dem Innendurchmesser des Teils 3 entsprechenden Aussendurchmesser 6 und einem axial teilweise wesentlich verringertem Aussennutdurchmesser 7 zumindest teilweise kraftschlüssig mit dem Teil 3 verbunden ist, wobei ein zwischen dem teilweise wesentlich verringertem Aussennutdurchmesser 7 der Zunderhülse 5 und dem Innendurchmesser der Teile 3, 4 im Stossbereich 2 entstandene, einseitig axial offene Ringraum 8 teilweise von dem beim Reibschweissen entstandenen Zunderwulst 9 ausgefüllt ist. Die Zunderhülse 5 ist gestuft mit zwei im wesentlich gleich langen, sich jeweils bis zu den Stirnseiten erstreckenden, Bereichen unterschiedlicher Aussendurchmesser ausgeführt, wobei der verjüngte Teil eine einseitig offene Aussennut ausbildet und etwa zu zwei Drittel ihrer Länge kraftschlüssig in das Teil 3 eingepresst ist, wodurch der wesentlich verringerte Aussennutdurchmesser 7 als einseitig offene Aussennut einen sich über beide Teile 3, 4 im Stossbereich 2 erstreckt und den axial einseitig offenen Ringraum 8 ausbildet. Die überquellende Zunderwulst 9 breitet sich umfänglich verteilt axial aus. Der am Aussenmantel der Teile 3, 4 entstehende Zunderwulst 9 ist durch einen üblichen Material abtragenden Nachbearbeitungsschritt entfernbar angeordnet. Der Aussennutdurchmesser 7 beträgt etwa 70 - 80 % des Innendurchmesser der Teile 3, 4 bzw. des Aussendurchmesser 6, wodurch ein guter Kompromiss zwischen dem Volumen des Ringraumes 8 zur Aufnahme der Zunderwulst 9 und dem Innendurchmesser 5a der Zunderhülse 5 gegeben ist.

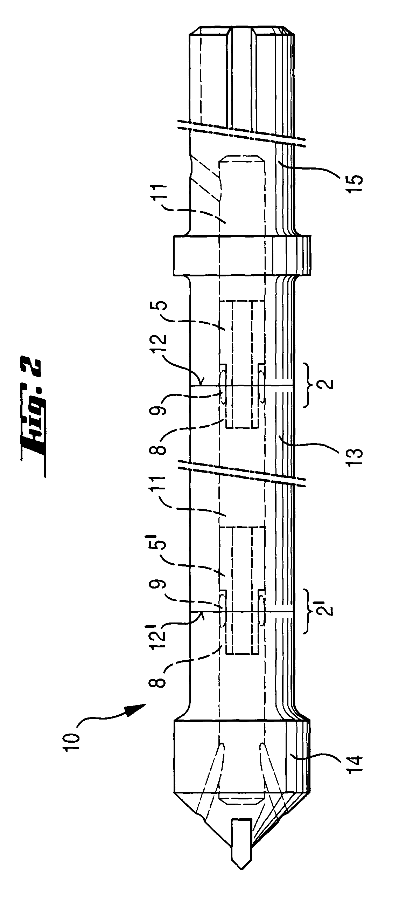

Nach Fig. 2 weist ein Gesteinsbohrwerkzeug 10 mit Bohrflüssigkeitskanal 11 eine reibverschweisste Verbindung an Stirnflächen 12, 12' eines rohrförmigen Schaftes 13 aus Stahl mit einem Werkzeugkopf 14 aus Stahl und mit einem Einsteckende 15 aus Stahl auf, wobei im Inneren des jeweiligen Stossbereiches 2, 2' jeweils eine Zunderhülse 5, 5' aus Stahl angeordnet ist. Durch die nur mögliche axiale Ausdehnung des Zunderwulstes im Ringraum steht der Innendurchmesser der Zunderhülse definitiv als Bohrmittelkanal 11 zur Verfügung und kann sicher bei der Dimensionierung des Bohrmitteldurchflusses berücksichtigt werden.

## Patentansprüche

1. Rohrverbindung zweier miteinander in einem Stossbereich (2) koaxial zugeordneter reibverschweisster Teile (3, 4) mit einem hohlen Inneren, **dadurch gekennzeichnet, dass** im hohlen Inneren des Stossbereiches (2) eine Zunderhülse (5) angeordnet ist.

2. Rohrverbindung nach einem der vorherigen Ansprüche, **dadurch gekennzeichnet, dass** die Zunderhülse (5) zumindest teilweise kraftschlüssig mit dem einen Teil (3) verbunden ist.

3. Rohrverbindung nach Anspruch 1 oder nach Anspruch 2, **dadurch gekennzeichnet, dass** die Zunderhülse (5) axial zumindest teilweise einen im wesentlichen dem Innendurchmesser eines Teils (3) entsprechenden Aussendurchmesser (6) und einem axial zumindest teilweise wesentlich verringertem Aussennutdurchmesser (7) aufweist.

4. Rohrverbindung nach Anspruch 3, **dadurch gekennzeichnet, dass** der Aussennutdurchmesser (7) bezüglich des Innendurchmessers der Teile (3, 4) 70 - 80 % beträgt.

5. Rohrverbindung nach Anspruch 3 oder nach Anspruch 4, **dadurch gekennzeichnet, dass** ein zwischen dem teilweise wesentlich verringertem Aussennutdurchmesser (7) der Zunderhülse (5) und dem Innendurchmesser der Teile (3, 4) im Stossbereich (2) entstandene, Ringraum (8) teilweise von dem beim Reibschweissen entstandenen Zunderwulst (9) ausgefüllt ist.

6. Rohrverbindung nach Anspruch 5, **dadurch gekennzeichnet, dass** der Ringraum (8) einseitig axial offen ist.

7. Rohrverbindung nach Anspruch 6, **dadurch gekennzeichnet, dass** die Zunderhülse (5) gestuft mit zwei im wesentlich gleich langen, sich jeweils bis zu den Stirnseiten erstreckenden, Bereichen unterschiedlicher Aussendurchmesser ausgeführt ist.

8. Rohrverbindung nach einem der vorherigen Ansprüche, **dadurch gekennzeichnet, dass** die Zunderhülse (5) aus einem Material mit höherem Schmelzpunkt bezüglich des Materials der Teile (3, 4) besteht.

9. Gesteinsbohrwerkzeug, welches aus einem rohrförmigen Schaft (13), einem Werkzeugkopf (14) und/oder einem Einsteckende (15) stirnseitig reibverschweisst zusammengesetzt ist, mit einem durch zumindest eine Rohrverbindung verlaufenden Bohrflüssigkeitskanal (11), **dadurch gekennzeichnet, dass** der Bohrflüssigkeitskanal (11) durch zumindest eine Rohrverbindung nach einem der vorherigen Ansprüche mit im Stossbereich (2, 2') angeordneter Zunderhülse (5, 5') verläuft.

10. Gesteinsbohrwerkzeug nach Anspruch 9, **dadurch gekennzeichnet, dass** im Inneren der beiden Stossbereiches 2, 2' jeweils eine Zunderhülse 5, 5' angeordnet ist.
